# EUROPEAN PATENT APPLICATION

(11) **EP 3 712 409 A1**
(43) Date of publication of application: **23.09.2020**
(21) Application number: 20162594.4
(22) Date of filing: 12.03.2020
(51) Int. Cl.: F02C 7/32, F01D 25/28

(54) **A BRACKET FOR A GAS TURBINE ENGINE**

(30) Priority: 21.03.2019 GB 201903851
(71) Applicant: Rolls-Royce plc, London N1 9FX (GB)
(72) Inventor: Peace, Richard, Derby, Derbyshire DE24 8BJ (GB); Cutting, Daniel, Derby, Derbyshire DE24 8BJ (GB); Frey, Yuri, Derby, Derbyshire DE24 8BJ (GB); Wootton, John, Derby, Derbyshire DE24 8BJ (GB)
(74) Representative: Rolls-Royce plc

(57) **Abstract**

The present disclosure relates to a bracket for a gas turbine engine, the bracket comprising an engine fixing for attaching the bracket to the gas turbine engine at a first end of the bracket, a payload fixing for attaching a payload to the bracket at a second end of the bracket; and a box section comprising a first wall having a first curved shape and extending from the first end to the second end, a second wall having a second curved shape and extending from the first end to the second end, and a plurality of separation members arranged to rigidly fix the first wall relative to the second wall.

## Description

The present disclosure relates to a bracket, and in particular a bracket for mounting a payload to a gas turbine engine.

Gas turbine engines typically have a number of payloads mounted thereon. For example, various other components may be mounted to the outside of the gas turbine engine, such as ducting, fairings, or solenoid blocks. It is necessary to secure these payloads to the engine in a secure manner, which is typically done by using a bracket. In known arrangements, brackets comprising a number of sheet metal plates are joined together to form a shape with sufficient bending strength to mount payloads to the engine. Such brackets must be able to withstand the weight of the payloads, as well as withstand external loads, such as vibrating loads, which are applied to both the payload and the engine. Thus, the brackets in known arrangements may be heavy, and may require multiple stages of manufacture.

There is therefore a need to provide improved brackets for mounting payloads to gas turbine engines.

According to a first aspect there is provided a bracket for a gas turbine engine, the bracket comprising an engine fixing for attaching the bracket to the gas turbine engine at a first end of the bracket, a payload fixing for attaching a payload to the bracket at a second end of the bracket, and a box section comprising a first wall having a first curved shape and extending from the first end to the second end, a second wall having a second curved shape and extending from the first end to the second end, and a plurality of separation members arranged to rigidly fix the first wall relative to the second wall.

The separation members may comprise a third wall and a fourth wall, the third wall and the fourth wall extending between the first wall and the second wall.

The separation members may further comprise a fifth wall extending between the first wall and the second wall, and located between the third wall and the fourth wall. At least one of the third, fourth and fifth walls may extend from the first end to the second end of the bracket.

At least one of the third, fourth and fifth walls may have at least one opening provided therein.

At least one of the first wall and the second wall may comprise first and second edges extending between the first and second ends of the bracket, wherein the curvature of the first edge and the second edge are different.

The engine fixing may include at least one engine fixing through-hole.

The payload fixing may include at least one payload fixing through-hole.

The payload fixing may include at least one payload fixing through-hole, and the axes of the at least one engine fixing through-hole may be perpendicular to the axes of the at least one payload fixing through-holes.

The engine fixing may include a plurality of engine fixing through-holes, and each of the engine fixing through-holes may have respective axes which are parallel to each other.

The payload fixing may include a plurality of payload fixing through-holes, and each of the payload fixing through-holes may have respective axes which are parallel to each other.

The bracket may comprise at least first and second engine fixing through holes located at the first end of the bracket, and at least first and second payload fixing through holes located at the second end of the bracket, wherein the angle between the axis of the first engine fixing through hole and the axis of the first payload fixing through hole is the same as the angle between the axis of the second engine fixing through hole and the axis of the second payload fixing through hole.

The bracket may comprise at least first and second engine fixing through holes located at the first end of the bracket, and at least first and second payload fixing through holes located at the second end of the bracket, wherein the angle between the axis of the first engine fixing through hole and the axis of the first payload fixing through hole is different to the angle between the axis of the second engine fixing through hole and the axis of the second payload fixing through hole.

The bracket may be integrally formed.

The bracket may be produced by additive layer manufacturing.

In another aspect, there is provided a gas turbine engine for an aircraft comprising: an engine core comprising a turbine, a compressor, and a core shaft connecting the turbine to the compressor, a fan located upstream of the engine core, the fan comprising a plurality of fan blades, and a gearbox that receives an input from the core shaft and outputs drive to the fan so as to drive the fan at a lower rotational speed than the core shaft, wherein the engine comprises at least one component mounted on the engine by a bracket as defined above.

In the above gas turbine engine, the turbine may be a first turbine, the compressor may be a first compressor, and the core shaft may be a first core shaft, the engine core further may further comprise a second turbine, a second compressor, and a second core shaft connecting the second turbine to the second compressor; and the second turbine, second compressor, and second core shaft may be arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular.

The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.
The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a perspective view of a bracket according to the present disclosure;
Figure 5 is a perspective view of a bracket according to the present disclosure; and
Figure 6 is a perspective view of a pair of brackets according to the present disclosure mounted in position.

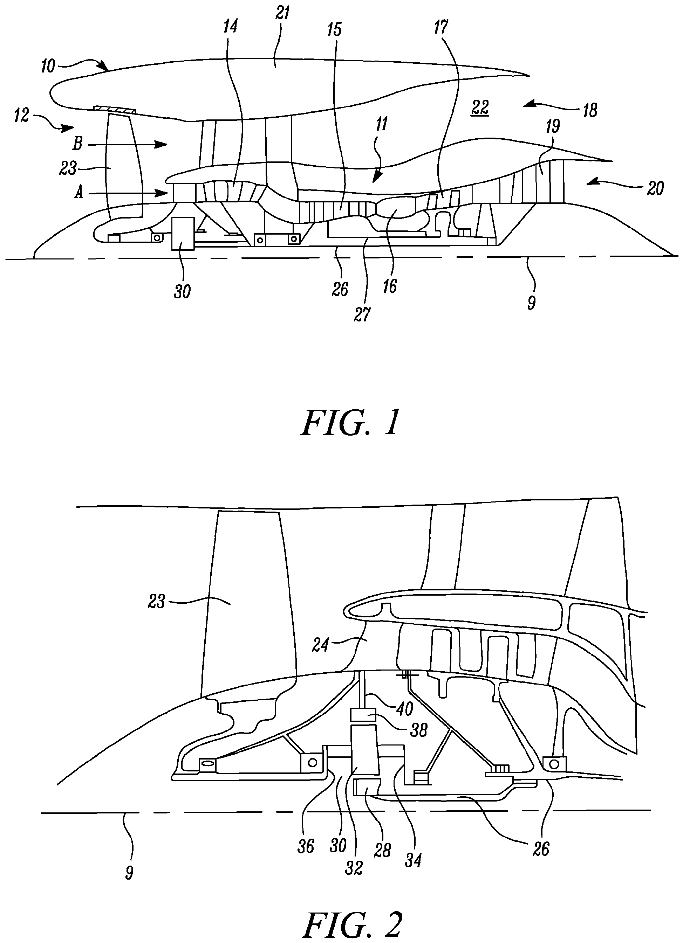

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

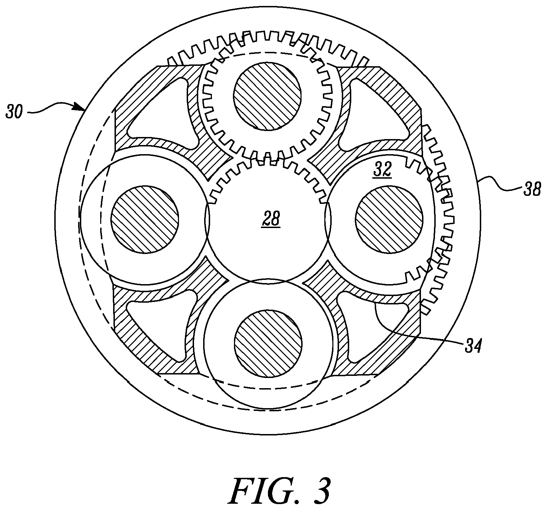

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The present disclosure provides a bracket 400 for a gas turbine engine, and in particular, a bracket for mounting a payload to the gas turbine engine. In other words, the bracket (when installed) is disposed between the engine and the payload, and may support the payload so as to attach it to the gas turbine engine.

The payload may be any component which is mounted to the engine. For example, the payload may be a solenoid or valve block, a length of ducting or a fairing. However, the applications of the bracket of the present disclosure are not limited to mounting these components, and one or more such brackets may be used to mount any component to the gas turbine engine.

The bracket 400 comprises an engine fixing 401 and a payload fixing 403. The engine fixing is located at a first end 402 of the bracket 400. The payload fixing 403 is located at a second end 404 of the bracket 400. The engine fixing is the part of the bracket which is attached to the engine when the bracket 400 is mounted, and the payload fixing is the part of the bracket which is attached to the payload when the bracket 400 is mounted. Between the first end 402 and the second end 404, there is provided a box section 405 and, in particular, a curved box section. The box section 405 comprises a first wall 406 having a first curved shape, and a second wall 407 having a second curved shape. Both the first wall 406 and the second wall 407 join the first end 402 of the bracket to the second end 404 of the bracket. That is, the box section 405 spans between the engine fixing 401 and the payload fixing 403.

The box section 405 further comprises a plurality of separation members 408, which are arranged to rigidly fix the first wall 406 relative to the second wall 407, and spatially fix the first wall 406 and the second wall 407 relative to each other. In other words, the plurality of separation members 408 separate the first wall 406 from the second wall 407, and are positioned between the first wall 406 and the second wall 407.

Together, the first wall, the second wall, and the plurality of separation members make up the box section 405. It will be understood that, due to the first wall 406 having a first curved shape, and the second wall having a second curved shape, the box section has an overall curve in its shape. It will be appreciated that conventionally, a box section has a straight cuboidal shape, rather than a curved shape. Thus, the present disclosure provides a box section with a shape which may be different from a conventional box section by virtue of it being curved. The curved box section 405 may have the property that, the shape and/or area of the cross-section of the box section, taken perpendicular to the direction from the first end of the bracket to the second end, is not constant and may further vary continuously along its length.

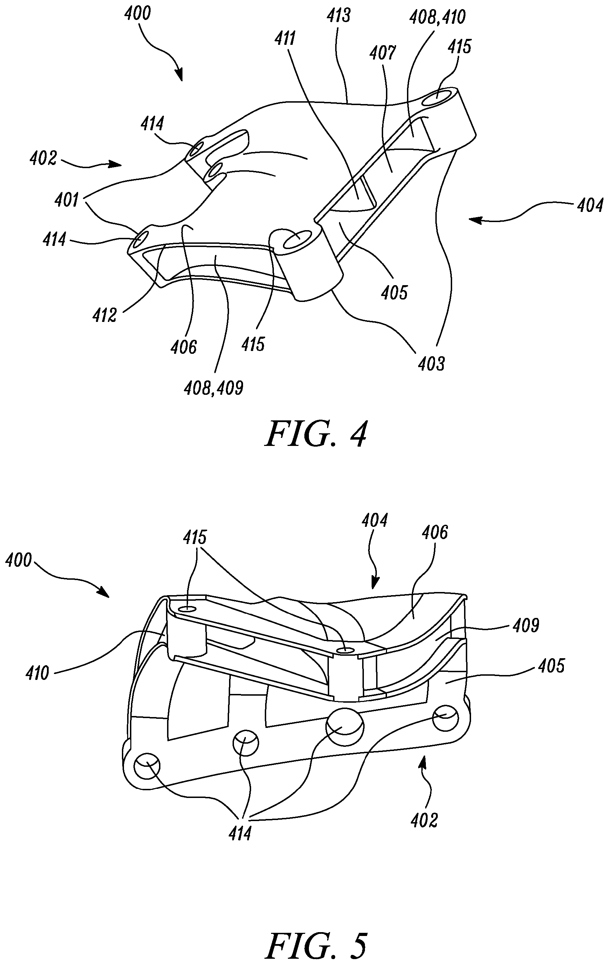

It will be appreciated that any suitable curved shapes may be used for the first curved shape and the second curved shape. For example, in the arrangement shown in Figure 4, the first curved shape and the second curve shape have a relatively small amount of curvature, whereas in the arrangement shown in Figure 5, the first curved shape and the second curved shape have a curvature such that the box section has a bend of approximately 90°. It will be understood that the first curved shape and the second curved shape may be different from each other, or may be similar or substantially the same.

A conventional straight box section has a well-defined natural frequency, at which it resonates. Brackets in gas turbine engines are typically subjected to a vibrating load, and if the frequency of the vibrating load matches the natural resonant frequency of the box section in the bracket, large vibrations may occur, and, in extreme cases, the bracket may fail. On the other hand, a curved box section, such as one of the present disclosure, has a much higher resonant frequency, which is typically a combination of many different resonances. This means that the bracket is less likely to resonate when subjected to a vibrating load in a gas turbine engine, thus providing an improved bracket. The curved box section may also mean that less material is needed to produce a bracket which is strong enough and resistant enough to bending. This may in turn lead to the bracket being lighter.

Conventional straight box sections are typically manufactured by bending of sheet metal, or by machining. A curved box section, such as that of the present disclosure, may be very difficult, or impossible, to manufacture using conventional manufacturing techniques. However, new techniques such as the use of additive layer manufacturing (also known as 3D printing) enable box sections to be produced in shapes, in particular curved shapes, which may otherwise not be possible using conventional manufacturing techniques, such as bending sheet metal or machining. The use of additive layer manufacturing also allows adjustments to the shape of brackets to be made without the need for extensive retooling, and may thus provide improved ease of manufacture.

Some or all of the parts of the bracket 400 may be integrally formed. In other words, parts of the bracket may be manufactured as one piece, rather than separately manufactured and subsequently joined together. All of the constituent parts of the bracket may be integrally formed, resulting in a bracket which is a single piece of material. This may be achieved, for example, by the use of additive layer manufacturing. Alternatively, several groups of parts of the bracket may be manufactured such that they are integrally formed, and subsequently joined together. As shown in Figure 4, the separation members 108 may include a third wall 409 and a fourth wall 410. The third wall 409 and the fourth wall 410 extend between the first surface and the second surface. Thus, the first wall 406 and the second wall 407 form two sides (or outer walls) of the box section, and the third wall and the fourth wall form the other two sides (or outer walls) of the box section 405.

As shown in Figure 4, there may also be a fifth wall 411 extending between the first wall 406 and the second wall 407. This may provide extra reinforcement to the box section 405. In effect, the fifth wall 411 may divide void in the box section 405 into two parts. The fifth wall 411 may be parallel to the third wall 409 and the fourth wall 410.

The first, fourth and fifth walls 409, 410, 411 may, as shown in Figure 4, be solid along their length. Alternatively, one or more openings may be provided in any one of, or several of, the third, fourth and fifth walls. This may allow the weight of the bracket to be reduced without affecting the structural integrity of the bracket.

The curved shapes of the first wall and the second wall may be defined by the walls having edges which are curved. For example, as shown in Figures 4 and 5, the first wall 406 and the second wall 407 may each have two outer edges, with each edge running between the first end of the bracket and the second end of the bracket. The curved shape of the box section may result in some or all of the outer edges being curved. In some curved shapes, at least some of the edges may have differing curvatures, and in other shapes, the curvatures of at least some of the outer edges may be the same. It will be understood that, in some arrangements, there may be some edges which have the same curved shapes and some which have differing curved shapes.

It will be understood that, although two possible curved shapes are shown in Figures 4 and 5, the curved box section of the present disclosure is not limited to these two shapes, and may be of any suitable shape. For example, the curvature may be chosen such that the component can be mounted at a particular angle relative to the mounting point on the engine.

The engine fixing and/or the payload fixing 402 may make use of through holes in order to attach the bracket to the engine and the payload respectively. For example, through holes may be provided such that the respective ends of the bracket can be secured to the engine and the payload using bolts.

The engine fixing 401 may include at least one engine fixing through hole 414. A plurality of engine fixing through holes 414 may be provided, as shown in Figures 4 and 5. For example, Figure 4 shows three engine fixing through holes, and Figure 5 shows four engine fixing through holes. However, it will be understood that any integer number of engine fixing through holes 414 may be provided.

Likewise, the payload fixing 402 may include at least one payload fixing through hole 415. Again, any number of payload fixing through holes 415 may be provided.

When a plurality of engine fixing through holes 414 are provided, each of the engine fixing through holes 414 may have axes which are parallel to each other. Likewise, when a plurality of payload fixing through holes 415 are provided, each of the payload fixing through holes 415 may have axes which are parallel to each other. It will be understood that, in the arrangement shown in Figure 4, the axes of the engine fixing through holes 414 and the axes of the payload fixing through holes 415 are not parallel to each other. In other words, the curve in the box section means that the angle of the engine fixing through holes 414 is different from that of the payload fixing through holes 415.

Figure 5 shows a further example of this difference in angle, in particular in which the difference in angle is a right angle. In other words, the engine fixing through holes 414 are at a right angle to the payload fixing through holes 415. This may be particularly useful where the bracket is to be mounted to a flange on the engine and the payload is to be mounted at an orientation which is at a right angle to the flange.

The box section 405 may also have a twist in its shape. In this arrangement, if the bracket comprises first and second engine fixing through holes at the first end of the bracket, and first and second payload fixing through holes at the second end of the bracket, the angle between the axis of the first engine fixing through hole and the axes of the first payload fixing through hole is different to the angle between the axis of the second engine fixing through hole and the axis of the second payload fixing through hole.

In arrangements where the box section has a curve but does not twist, if the bracket comprises first and second engine fixing through holes at the first end of the bracket, and first and second payload fixing through holes at the second end of the bracket, the angle between the axis of the first engine fixing through hole and the axis of the first payload fixing through hole is the same as the angle between the axis of the second engine fixing through hole and the axis of the second payload fixing through hole. In other words, for any given pair of engine fixing through hole 414 and payload fixing through hole 415, the angles between the axes of those holes are the same.

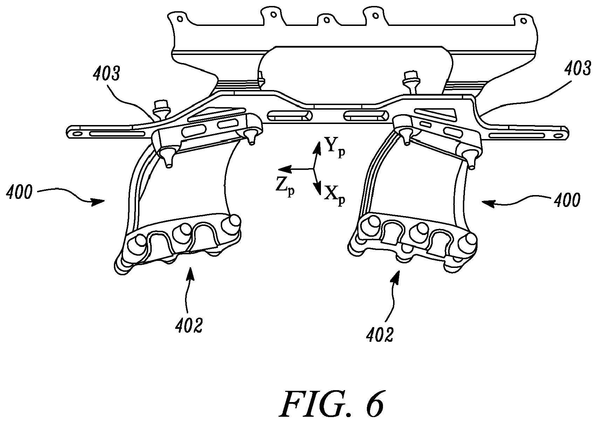

Figure 6 shows two brackets 400 in an example of how they may be mounted. The engine fixing 401, and thus the first end 402 of the bracket may be attached to an engine using bolts. The payload fixing 403, and thus the second end of the bracket 404, may be attached to a further mounting part, on which the payload may be positioned. Alternatively, the payload may be directly mounted to the brackets without a further mounting part therebetween.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A bracket (400) for a gas turbine engine, the bracket comprising:
an engine fixing (401) for attaching the bracket to the gas turbine engine at a first end (402) of the bracket;
a payload fixing (403) for attaching a payload to the bracket at a second end (404) of the bracket; and
a box section (405) comprising a first wall (406) having a first curved shape and extending from the first end to the second end, a second wall (407) having a second curved shape and extending from the first end to the second end, and a plurality of separation members (408) arranged to rigidly fix the first wall relative to the second wall.

2. The bracket according to claim 1, wherein the separation members comprise a third wall (409) and a fourth wall (410), the third wall and the fourth wall extending between the first wall and the second wall.

3. The bracket according to claim 2, wherein the separation members further comprise a fifth wall (411) extending between the first wall and the second wall, and located between the third wall and the fourth wall.

4. The bracket according to claim 2 or 3, wherein at least one of the third, fourth and fifth walls (409, 410, 411) extend from the first end (402) to the second end (404) of the bracket.

5. The bracket according to any preceding claim, wherein at least one of the first wall and the second wall comprises first and second edges (412, 413) extending between the first and second ends of the bracket, wherein the curvature of the first edge and the second edge are different.

6. The bracket according to any preceding claim, wherein the engine fixing (401) includes at least one engine fixing through-hole (414).

7. The bracket according to any preceding claim, wherein the payload fixing (402) includes at least one payload fixing through-hole (415).

8. The bracket according to claim 7, wherein the payload fixing includes at least one payload fixing through-hole (415), and the axes of the at least one engine fixing through-hole (414) are perpendicular to the axes of the at least one payload fixing through-holes (415).

9. The bracket according to any preceding claim, wherein the engine fixing includes a plurality of engine fixing through-holes (414), and each of the engine fixing through-holes have respective axes which are parallel to each other.

10. The bracket according to any preceding claim, wherein the payload fixing includes a plurality of payload fixing through-holes (415), and each of the payload fixing through-holes have respective axes which are parallel to each other.

11. The bracket according to any preceding claim, comprising at least first and second engine fixing through holes located at the first end of the bracket, and at least first and second payload fixing through holes located at the second end of the bracket, wherein the angle between the axis of the first engine fixing through hole and the axis of the first payload fixing through hole is the same as the angle between the axis of the second engine fixing through hole and the axis of the second payload fixing through hole.

12. The bracket according to any preceding claim, comprising at least first and second engine fixing through holes located at the first end of the bracket, and at least first and second payload fixing through holes located at the second end of the bracket, wherein the angle between the axis of the first engine fixing through hole and the axis of the first payload fixing through hole is different to the angle between the axis of the second engine fixing through hole and the axis of the second payload fixing through hole.

13. The bracket according to any preceding claim, wherein the bracket is integrally formed.

14. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft,
wherein the engine comprises at least one component mounted on the engine by a bracket as defined in any preceding claim.

15. The gas turbine engine according to claim 14 wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
